# EUROPEAN PATENT APPLICATION

(11) **EP 2 233 740 A1**
(43) Date of publication of application: **29.09.2010**
(21) Application number: 09704051.3
(22) Date of filing: 23.01.2009
(51) Int. Cl.: F03G 7/06, G02B 7/04

(54) **DRIVE MECHANISM AND DRIVE DEVICE**

(30) Priority: 23.01.2008 JP 2008012241; 23.01.2008 JP 2008012243
(71) Applicant: Konica Minolta Opto, Inc., Hachioji-shi Tokyo 192-8505 (JP)
(72) Inventor: NODA, Atsuhiro, Hino-shi Tokyo 191-8511 (JP); WADA, Shigeru, Hino-shi Tokyo 191-8511 (JP)
(74) Representative: HOFFMANN EITLE
(86) International application number: PCT/JP2009/051055
(87) International publication number: WO 2009/093681

(57) **Abstract**

A drive mechanism and a drive device each comprise a driven body (1), a displacement member (2), and an SMA actuator (3) for giving a displacement force. The driven body (1) is coupled to a fixed section through a viscoelastic member (11 (11A, 11B, 11C, 11D)). A displacement output section is engaged with the driven body, and thereby a predetermined portion of the displacement member (2) for displacing the driven body in a first-axis direction is connected to the fixed section through the viscoelastic member (11 (11E, 11F, 11G, 11H)). A shape-memory alloy (SMA) actuator is used. The position of the driven body is stably and quickly controlled. Even if a shock force is exerted or even if the drive mechanism and the drive device are left in a high-temperature environment for a long time, the SMA, the drive mechanism, and the drive device do not deteriorate, the sizes and weights thereof can be reduced, and they can be easily assembled.

## Description

### Technical Field

The present invention relates to a drive mechanism and a drive device which drive a compact machine element by use of a shape memory alloy actuator. In particular, the present invention relates to a drive mechanism and a drive device which are suitable for moving a lens unit constituting a shooting optical system in an optical axis direction.

### Background Art

In recent years, image quality of image sensors has been drastically improved as seen in, for example, the increase in number of pixels in image sensors mounted in camera phones and the like. Along with such improvement, there has been a demand for sophisticated functions such as a focusing function and a zoom function to be provided in addition to the basic function of shooting.

A lens drive device moving a lens in an optical axis direction is necessary for provision of such sophisticated functions, and researches have recently been conducted on various methods of application of a lens drive device using a shape memory alloy (referred to as SMA)) actuator. In such a device, an SMA generates a contraction force by, for example, being energized to be heated, and the contraction force is used as a lens driving force. The device is advantageous in that it can easily be made compact and lightweight and that a comparatively large driving force can be obtained.

Furthermore, by using a wire-shaped SMA, it is possible to build a rectilinear drive device that utilizes a variation of the length of the wire-shaped SMA wire by several percent (for example 3 to 5 %) of the length. Moreover, by combining such a wire-shaped SMA and a displacement magnifying mechanism (e.g., a lever mechanism), it is possible to build a rectilinear drive device in which a displacement amount of the wire-shaped SMA is amplified.

Known examples of lens drive mechanisms to which SMA actuators are applied are the structures disclosed in Patent Documents 1 to 3. In these structures, the movement direction of an SMA is changed or the amount of movement of the SMA is amplified by a lever mechanism.

To provide a camera phone or the like with a high-performance focusing or zoom function, it is necessary to control the position of the lens, and make the lens stop at a predetermined position. A known method of achieving these is a servo control performed by using a position sensor for detecting the position of a lens or by using a method of detecting the position of a lens in terms of the resistance of an SMA when it is energized.

However, the servo control, when performed at a high speed, causes the drive mechanism including the SMA to vibrate, taking a long time to make a lens stop at a target position in a stable state, and this is inconvenient. Furthermore, the whole drive mechanism is caused to oscillate, which not only makes it impossible to control the position of a lens but also results in a problem that the drive mechanism itself is damaged.

Moreover, a drive mechanism using a wire-shaped SMA is associated with a problem that the SMA suffers from deterioration when a shock is applied to the apparatus as an external force or a problem that SMA stress generated when the SMA is heated invites degradation of the drive mechanism. These are phenomena peculiar to SMA drive mechanisms. For example, if a shock force is applied to an apparatus when it is dropped or the like, the shock force acts on the lens and the like.

Here, the lens is held by a lever member driven by a bias spring and an SMA, biasing and driving forces thereof can be said to be smaller in comparison with the shock force. Thus, receiving the shock force, the lens moves far away from its original position to collide with a collision position of a drive stroke end, as a result of which a stress is generated not only in the lens but also in the SMA.

Also, the SMA itself starts to transform when heated, and a stress is generated thereby. Thus, if the SMA is left in a high-temperature state for a long time, the drive mechanism left exposed to the stress generated by the SMA is degraded. This is often observed particularly with drive mechanisms formed with a resin material such as plastics.

A parallel link mechanism composed of a pair of parallel plate springs facing each other is known as a guide mechanism allowing a low-friction rectilinear movement. Thus, an actuator device (a drive device) that moves a lens and the like by use of a parallel plate-spring mechanism and an SMA has been already disclosed (see, for example, Patent Document 4).
Patent Document 1: JP-A-2007-58075
Patent Document 2: JP-A-2007-58076
Patent Document 3: JP-A-2007-60530
Patent Document 4: JP-A-2002-130114

### Disclosure of the Invention

### Problems to be Solved by the Invention

If a stress larger than a predetermined value is applied to an SMA, the SMA expands. Here, if the SMA expands by a small amount, it is possible to restore the SMA to its original shape by energizing it. However, if the SMA expands by a predetermined amount or more, the expansion stays as permanent deformation and the SMA cannot be restored to its original shape. An electric current of a predetermined level or higher needs to be supplied to an SMA in which permanent deformation has occurred as described above, and the drive mechanism cannot be driven in a desired range even with a maximum electric current.

With a method in which a parallel link mechanism composed of a pair of plate springs is used to hold a driven body, rectilinear movement of the driven body can be performed in a low-friction state. However, in a low-friction state, it is difficult to prevent a resonance phenomenon caused by spring forces of the parallel plate springs, the bias spring, and the like.

The present invention has been made in view of the foregoing, and an object of the present invention is to provide a drive mechanism and a drive device to which a shape memory alloy (SMA) actuator is applied, the drive mechanism and the drive device having the following features. That is, with the drive mechanism and the drive device, it is possible to perform stable and high-speed position control of a driven body, the SMA actuator or an apparatus is protected from degradation caused by application of a shock force or by being left under a high-temperature environment for a long time, and furthermore, it is possible to achieve compactness and lightweightness as well as easy assembly.

### Means for Salving the Problem

To achieve the above object, according to one aspect of the present invention, a drive mechanism is provided with: a fixed portion; a driven body; and a shape memory alloy actuator which applies a driving force to the driven body to move the driven body in a first axis direction. Here, the driven body and the fixed portion are connected to each other via a viscoelastic member.

With the above structure, since the driven body is connected to the fixed portion via the viscoelastic member, when the driven body is displaced, the displacement of the driven body causes the viscoelastic member to be deformed. The deformation of the viscoelastic member absorbs the vibration energy generated in the direction of the displacement when the driven body is displaced in the first axis direction. Also, even when an external force which tends to displace the driven body is applied, the vibration energy is absorbed by the viscoelastic member to prevent the apparatus from vibrating, and thus deterioration of the shape memory alloy actuator is reduced as well as damage of the apparatus is prevented. In addition, resonance is effectively prevented from occurring when the driven body is driven via the shape memory alloy actuator, and this makes it possible to perform fast and stable position control of the driven body.

According to the present invention, in the drive mechanism structured as described above, it is preferable that the viscoelastic member is a viscoelastic resin or an elastic adhesive. With this structure, since a desired viscoelastic effect is exerted by fitting a viscoelastic resin or an elastic adhesive to a predetermined portion after assembly, it is possible to obtain an easy-to-assemble drive mechanism.

According to the present invention, in the drive mechanism structured as described above, it is preferable that the fixed portion has a through hole portion, that there is provided a support member which supports the driven body to be movable in the first axis direction with a predetermined clearance kept with respect to the through hole portion, and that the viscoelastic member is placed in the clearance. With this structure, the viscoelastic member can be placed simply by being charged into the clearance, and this helps achieve compactness and lightweightness.

According to the present invention, in the drive mechanism structured as described above, it is preferable that the driven body has at least one driving force input portion which receives the driving force of the shape memory alloy actuator, and that the viscoelastic member is placed in the clearance which is present along the first axis direction and which includes the driving force input portion. With this structure, by providing the viscoelastic member which absorbs vibration energy in the same area along the axis line direction where the driving force for moving the driven body acts, a viscoelastic force acts on the same axis rectilinearea as the driving force. Thereby, the two forces are balanced to allow smooth rectilinear movement of the driven body.

According to the present invention, it is preferable that the drive mechanism structured as described above is further provided with a displacement member which transmits the driving force of the shape memory alloy actuator to the driven body, and that the displacement member is a lever member provided with: a displacement input portion around which the shape memory alloy actuator is placed; and a displacement output portion which is formed in a shape of an arm surrounding both sides of the driven body and which is engaged with the driving force input portion. With this structure, vibration can be prevented even when a displacement amount of the shape memory alloy actuator is amplified via the lever member to displace the driven body.

According to the present invention, in the drive mechanism structured as described above, it is preferable that the viscoelastic member is placed in the clearance all along a circumference of the clearance. With this structure, it is possible to increase the area over which the driven body and the viscoelastic member are in contact with each other, and thereby a significant viscoelastic effect can be exerted.

According to another aspect of the present invention, a drive mechanism is provided with: a fixed portion; a driven body; a support member which supports the driven body such that the driven body is movable in a first axis direction with respect to the fixed portion; a shape memory alloy actuator; and a displacement member which transmits a driving force of the shape memory alloy actuator to the driven body. Here, a predetermined portion of the displacement member and the fixed portion are connected to each other via a viscoelastic member.

With this structure, since the predetermined portion of the displacement member is connected to the fixed portion via the viscoelastic member, the displacement is driven and displaced, deforming the viscoelastic member. As a result, the driving force that the displacement member receives is distributed and the vibration energy generated when the driving force is applied is absorbed. This helps alleviate the stress of the shape memory alloy actuator generated when it is left under a high-temperature environment for a long time, and as a result, deterioration of the shape memory alloy actuator and the apparatus (particularly when it is a resin product) is reduced and damage of the apparatus is prevented. Furthermore, resonance is effectively prevented from occurring when the driven body is driven via the shape memory alloy actuator, and this leads to a drive mechanism that is capable of performing fast and stable position control of the driven body.

According to the present invention, in the drive mechanism structured as described above, it is preferable that the viscoelastic member is a viscoelastic resin or an elastic adhesive. With this structure, a desired viscoelastic effect is exerted by adhering a viscoelastic resin or an elastic adhesive to a predetermined position after the apparatus is assembled, and this leads to an easy-to-assemble drive mechanism.

According to the present invention, in the drive mechanism structured as described above, it is preferable that the displacement member is provided with: a displacement input portion to which the driving force of the shape memory alloy actuator is inputted; a displacement output portion which is engaged with the driven body to transmit the driving force to the driven body; and a pivotally-supponing portion, and that at least one of the displacement input portion, the displacement output portion, and the shaft supporting portion is connected to the fixed portion via a viscoelastic member. With this structure, a drive mechanism adaptable to various types of drive device can be realized by selecting a proper one of the portions or properly combining the portions such that a desired viscoelastic effect is exerted.

According to the present invention, in the drive mechanism structured as described above, it is preferable that the displacement member have an extension arm extending to an opening portion or a recess portion formed in the fixed portion, and that the opening portion or the recess portion and the extension arm be connected to each other via a viscoelastic member. With this structure, the viscoelastic member can be placed in a position at a predetermined arm length by being fitted to the additionally-provided extension arm, so as to achieve exertion of a desired viscoelastic effect by use of what is called the principle of leverage.

According to the present invention, in the drive mechanism structured as described above, it is preferable that the fixed portion has a through hole portion, that there is provided a support member which supports the driven body to be movable in the first axis direction with a predetermined clearance kept with respect to the through hole portion, that the shape memory alloy actuator is a shape memory alloy wire, and the displacement member is a lever member provided with a displacement input portion around which the shape memory alloy wire is placed, a pivotally-supporting portion, and a displacement output portion which gives displacement to the driven body by rotating around the pivotally-supporting portion, and that the fixed portion and at least one of the displacement input portion, the pivotally-supporting portion, and the displacement output portion of the lever member are connected to each other via a viscoelastic member. With this structure, even if the shape memory alloy wire tends to contract under a high-temperature environment, the viscoelastic member fitted to a predetermined position of the lever member prevents displacement of the lever member and vibration, and also prevents creep of resin components around the lever member. Thus, a drive mechanism having this structure is capable of preventing resonance and deterioration of the apparatus.

According to another aspect of the present invention, a drive device is provided with: a fixed portion provided with a base member having a through hole portion; and a driven body supported via a support member fitted to the base member such that the driven body is movable in reciprocation in the through hole portion along a direction of an axis of the driven body, a driving force for achieving the reciprocation being obtained via a shape memory alloy wire fitted to the base member. Here, the driven body is moved via a lever member which amplifies a displacement amount of the shape memory alloy wire. The lever member is formed to have: a drive arm which is engaged with an engagement projection portion provided in the driven body at each of two external sides of the driven body opposite to each other with an axis line of the driven body therebetween, the drive arm moving the driven body in a direction of an axis line of the driven body; a pivotally-supporting portion which swingably supports the drive arm; and an extending arm provided to extend downward from the pivotally-supporting portion so as to be bent with respect to the drive arm. A support leg is provided in the base member to support the pivotally-supporting portion, and the drive arm is made to swing via the extending arm by contraction of the shape memory alloy wire suspended from a suspension portion provided at an end side of the extending arm. The driven body and the fixed portion are connected to each other via a viscoelastic member placed on an area of the movable driven body on the direction of the axis line of the driven body, the area at least including the engagement projection portion.

With this structure, even when an external force acts on the driven body, in which case the driven body tends to move, the viscoelastic member absorbs the vibration energy to prevent the apparatus from vibrating, thus protecting the apparatus from damage. In addition, with this structure, a drive device can be obtained which is capable of effectively preventing resonance from occurring when the driven body is made to move via the shape memory alloy wire.

According to the present invention, in the drive device structured as described above, it is preferable that the viscoelastic member is a viscoelastic resin or an elastic adhesive. With this structure, a desired viscoelastic effect is exerted by adhering a viscoelastic resin or an elastic adhesive in a clearance around the driven body after the device is assembled, and this leads to an easy-to-assemble drive device.

According to the present invention, in the drive device structured as described above, it is preferable that the viscoelastic member is placed in a clearance between the through hole portion of the base member and the driven body such that the viscoelastic member is placed at least in an area on a direction of the axis line of the driven body in which the engagement projection portion is located. With this structure, by providing the viscoelastic member which absorbs vibration energy in the same area on the direction of the axis line of the driven body where the driving force for moving the driven body acts, a viscoelastic force acts on the same area on the direction of the axis line of the driven body where the driving force acts. In this way, the two forces are balanced, and thereby is achieved smooth rectilinear movement of the driven body.

According to the present invention, in the drive device structured as described above, it is preferable that the viscoelastic member is placed in the clearance along an entire circumference of the clearance. With this structure, it is possible to achieve more desirable rectilinear movement of the driven body, and it is also possible to exert a significant viscoelastic effect by increasing the area over which the driven member and the viscoelastic member are in contact with each other.

According to the present invention, in the drive device structured as described above, it is preferable that the shape memory alloy wire is fitted by being wound around the suspension portion, as a winding portion, in an L-shape or a U-shape surrounding an external side of the driven body. With this structure, it is possible to use a longer shape memory alloy wire as a drive source. Furthermore, the shape memory alloy wire arranged in the L-shape or the U-shape performs secure and well-balanced driving of the lever member.

According to the present invention, in the drive device having the above structure, it is preferable that the driven body is a lens barrel, the axis line is an optical line, the base member has a rectangular shape in section in a direction perpendicular to the optical axis, a circular through hole portion is formed in a middle portion of the base member, the lens barrel being freely inserted through the through hole portion, the support leg is provided in a corner of the rectangular shape, and an electrode fixing portion for the shape memory alloy wire is provided in one or two corners adjacent to the corner. The drive device having this structure is mountable in a compact lens unit, securing the rectilinear movement in the direction of the optical axis of the lens and preventing vibration to protect the apparatus from damage, and thus the drive device is mountable in a mobile phone, etc.

According to another aspect of the present invention, a drive device is provided with: a fixed portion provided with a base member having a through hole portion; and a driven body supported, via a support member fitted to the base member, to be movable in reciprocation in the through hole portion in a direction of an axis line of the driven body, a driving force for the reciprocation being obtained via a shape memory alloy wire fitted to the base member. Here, the driven body is made to move via a lever member which amplifies a displacement amount of the shape memory alloy wire; the lever member is provided with: a drive arm which is engaged with an engagement projection portion provided in the driven body at each of two external sides of the driven body opposite to each other with an axis line of the driven body therebetween, the drive arm moving the driven body in the direction of the axis line of the driven body; a pivotally-supporting portion which swingably supports the drive arm; and an extending arm provided to extend downward from the pivotally-supporting portion so as to be bent with respect to the drive arm; a support leg is provided in the base member to support the pivotally-supporting portion, and the drive arm is made to swing, via the extending arm, by contraction of the shape memory alloy wire suspended from a suspension portion provided at an end side of the extending arm; and at least one of the displacement input portion, the pivotally-supporting portion, and the displacement output portion of the lever member is connected to the fixed portion via a viscoelastic member.

With this structure, even when an external force acts on the driven body, in which case the driven body tends to move, the viscoelastic member absorbs the vibration energy to prevent the apparatus from vibrating, thus protecting the apparatus from damage. This helps alleviate the stress of the shape memory alloy actuator generated when it is left under a high-temperature environment for a long time, and as a result, deterioration of the shape memory alloy actuator and the apparatus (particularly when it is a resin product) is reduced and damage of the apparatus is prevented. In addition, with this structure, a drive device can be obtained which is capable of effectively preventing resonance from occurring when the driven body is made to move via the shape memory alloy wire.

According to the present invention, in the drive device structured as described above, it is preferable that the viscoelastic member is a viscoelastic resin or an elastic adhesive. With this structure, a desired viscoelastic effect is exerted by adhering a viscoelastic resin or an elastic adhesive in a clearance around the driven body after the device is assembled, and this leads to an easy-to-assemble drive device.

According to the present invention, in the drive device structured as described above, it is preferable that the lever member has an extension arm extending to an opening portion or a recess portion formed in the fixed portion, and that the opening portion or the recess portion and the extension arm are connected to each other via a viscoelastic member. This structure makes it possible to place the viscoelastic member in a position at a predetermined arm length by fitting the viscoelastic member to the additionally-provided extension arm, and thereby a desired viscoelastic effect can be exerted by use of what is called the principle of leverage.

According to the present invention, in the drive device structured as described above, it is preferable that the shape memory alloy wire is fitted by being wound around the suspension portion as a winding portion, in an L-shape or a U-shape surrounding an external side of the driven body. With this structure, it is possible to use a longer shape memory alloy wire as a drive source. Furthermore, the shape memory alloy wire arranged in the L-shape or the U-shape performs secure and well-balanced driving of the lever member.

According to the present invention, in the drive device structured as described above, it is preferable that the driven body is a lens barrel, the axis line is an optical line, the base member has a rectangular shape in section in a direction perpendicular to the optical axis, a circular through hole portion is formed in a middle portion of the base member, the lens barrel being freely inserted through the through hole portion, the support leg is provided in a corner of the rectangular shape, and an electrode fixing portion for the shape memory alloy wire is provided in one or two corners adjacent to the corner. With this structure, the drive device is mountable in a compact lens unit. The drive device is free from degradation of the SMA or the drive mechanism even under a high-temperature environment, secures the rectilinear movement of the lens along its optical axis, and prevents vibration. Thus, the drive device is mountable as a lens drive device in a mobile phone, etc.

### Advantages of the Invention

According to the present invention, in a drive mechanism and a drive device to which an SMA actuator is applied, a driven body is connected to a fixed portion via a viscoelastic member. As a result, the driven body is prevented from vibrating and deterioration of the SMA is prevented. Furthermore, a predetermined portion of a displacement member that receives a driving force from the SMA actuator to displace the driven member is connected to the fixed portion via a viscoelastic member. This helps alleviate the stress of the SMA actuator generated when it is left under a high-temperature environment for a long time and prevent deterioration of the SMA actuator or of the apparatus (particularly when it is a resin product), protecting the apparatus from damage. Thus, according to the present invention, it is possible to obtain a drive mechanism and a drive device that effectively prevent resonance from occurring when a driven body is driven via an SMA actuator and perform fast and stable position control of the driven body, contributing to compactness and lightweightness as well as easy assembly.

### Brief Description of Drawings

[Fig. 1] shows plan views of drive devices embodying the present invention, where (a) is a plan view of a first embodiment and (b) is a plan view of a second embodiment;
[Fig. 2] shows side views of drive devices embodying the present invention, where (a) is a side view of the first embodiment and (b) is a side view of a third embodiment as a modified example of the first embodiment;
[Fig. 3] shows side views illustrating phenomena observed upon application of a shock, where (a) shows a case of a drive device provided with no viscoelastic member and (b) shows a case of the first embodiment provided with a viscoelastic member;
[Fig. 4] are diagrams of a drive device provided with no viscoelastic member, where (a) is a plan view, (b) is a side view where no driving force is acting on the device, and (c) is a side view where a driving force is acting on the device;
[Fig. 5] shows side views of drive devices embodying the present invention, where (a) is a side view of a fourth embodiment, (b) is a side view of a fifth embodiment, and (c) is a side view of a sixth embodiment;
[Fig. 6] is a side view of a seventh embodiment of the drive device embodying the present invention;
[Fig. 7] shows views schematically illustrating phenomena observed under a high-temperature environment, where (a) shows a conventional example provided with no viscoelastic member when a stress is generated, (b) shows the conventional example after a stress has continued for a long time, and (c) shows a drive device of the fourth embodiment provided with a viscoelastic member when a stress is generated;
[Fig. 8] are diagrams showing vibration waveforms, where (a) shows one observed when a viscoelastic member of the present invention is provided, exerting a vibration damping effect, (b) shows one observed with a conventional lens unit drive device where no viscoelastic member is provided, and (c) shows one observed with the conventional lens unit drive device when an even larger vibration is applied thereto; and
[Fig. 9] are diagrams showing frequency response characteristics, where (a) shows a frequency response characteristic of a drive device where no viscoelastic member is provided and (b) shows a frequency response characteristic of a drive device of the present invention where a viscoelastic member is placed in a clearance between a base member and the driven body.

### List of Reference Symbols

- 1: driven body
- 2: displacement member (lever member)
- 2A: displacement input portion
- 2B: displacement output portion
- 3: shape memory alloy wire (SMA actuator)
- 4: base member (fixed portion)
- 6: parallel plate spring (support member)
- 6A: first plate spring
- 6B: second plate spring
- 7: bias spring
- 11 (11A-11B): viscoelastic member
- 20: pivotally-supporting portion
- 21: drive arm
- 22: extending arm
- 23: suspension portion
- 24: extension arm
- A1 to A7: drive devices (first to seventh embodiments)
- AX: optical axis (first axis)
- CL: clearance

### Best Mode for Carrying Out the Invention

Hereinafter, embodiments of the present invention will be described with reference to the drawings. The same components will be identified by common reference symbols, and detailed description of them will be omitted if possible.

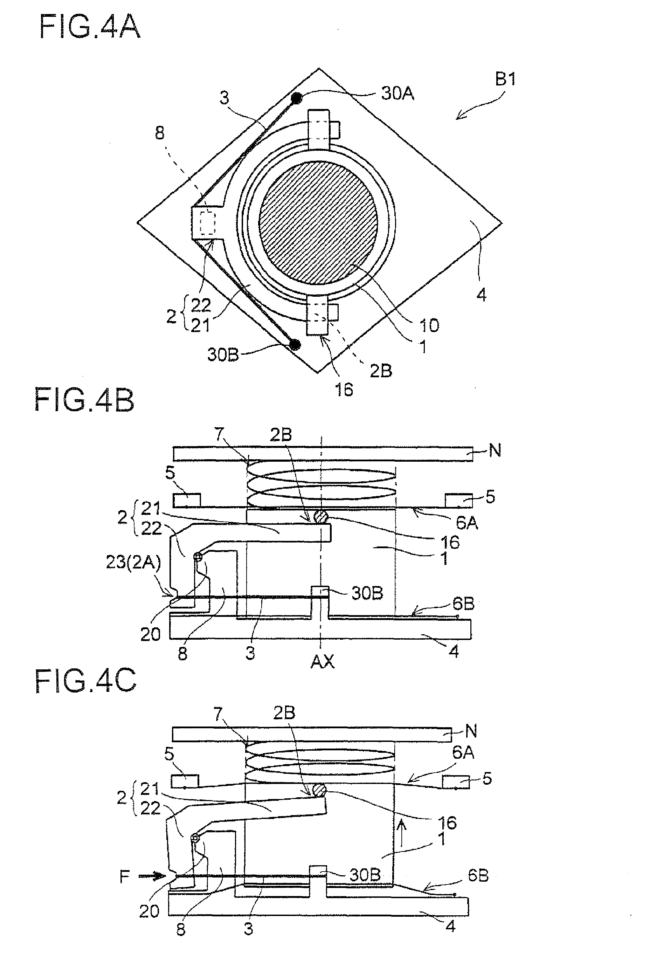

First, a description will be given of a drive device B1 having no viscoelastic member provided therein with reference to Fig. 4. As shown in Figs. 4(a) and 4(b), the drive device B1 is mainly provided with: a driven body 1 (such as a lens unit comprising a lens 10); a displacement member 2 that moves the driven body in an axis line direction (a first axis direction: for example, an optical axis AX direction); and a shape memory alloy actuator (an SMA actuator) 3 that applies a displacement force to the displacement input portion of the displacement member 2, and these components are integrally fitted to a base member 4.

Furthermore, as a support member for elastically supporting the driven body 1 with respect to the base member 4, there are provided a pair of parallel plate springs 6 (6A, 6B) and a bias spring 7 that urges the driven body 1 in a predetermined direction. For example, one end portion of the driven body 1 is supported by the first plate spring 6A fitted to the base member 4, the other end portion of the driven body 1 is supported by the second plate spring 6B fitted to a top panel 5, and the bias spring 7 that urges the driven body 1 in a direction opposite to a direction in which the driven body 1 is moved by the displacement member 2 is arranged between the other end portion and a cover member N. In the plan view of Fig. 4(a), the top panel 5 and the bias spring 7 are omitted for ease of illustration.

The base member 4 is fixed to a member (e.g., a frame, a mount board, or the like of a mobile phone) to which the driven device is to be fitted, and the base member 4 is a stationary member that forms, for example, the base of a lens drive device. The base member 4 is, for example, formed in a shape of a plate that is square in plan view, and is entirely made of a resin material or the like.

In a case in which the driven body 1 is a lens unit, it is provided with an imaging lens, a lens drive frame that holds the lens, and a lens barrel in which the lens drive frame is accommodated, which together form an imaging optical system that moves the imaging lens to an optimum focusing position in the optical axis direction AX of the imaging lens. Also, a pair of engagement projection portions 16 are provided at two opposing positions along a circumference edge of the driven body I at a moving side (an objective side) end to project therefrom, with an angular difference of 180 degrees in a circumferential direction from each other.

The driven body 1 is placed on the base member 4 in a state in which it is inserted into an opening portion formed in the top panel 5. More specifically, the driven body 1 is placed such that the pair of engagement projection portions 16 are positioned in the vicinity of a pair of opposite corners of the base member 4. To the base member 4 and the top panel 5 are fixed the parallel plate springs 6 (the first plate spring 6A and the second plate spring 6B, respectively), and to these plate springs 6 is fixed the driven body 1 which is a lens unit.

With this structure, the driven body 1 is displaceably supported with respect to the base member 4 or the like, and a degree of freedom of its displacement is regulated to the direction along the optical axis AX. That is, the driven body 1 is supported via the support members so as to be movable in the first axis direction keeping a predetermined clearance with respect to the fixed portions. The top panel 5, which may be fixed to the base member 4 via an unillustrated column or the like or may be integrally formed with the base member 4, is a fixed member like the base member 4.

The displacement member 2 is a member that transmits a driving force of the SMA actuator to the driven body 1, and is provided with a displacement input portion from which the SMA actuator is suspended and a displacement output portion that transmits the driving force. The displacement member 2 is formed as a lever member provided with: a pivotally-supporting portion that functions as a swing center; and a drive arm that is formed in an arm shape surrounding both sides of the driven body 1 and that is engaged with the engagement projection portions 16 to apply a driving force in the optical axis AX direction of the driven body 1. Thus, hereinafter, the displacement member 2 will be referred to as a lever member 2. Thus, hereinafter, the displacement member 2 will be referred to as a lever member 2.

The lever member 2 is placed to a side the driven body 1, specifically, in a corner portion of the base member 4 other than corner portions of the base member 4 where the engagement projection portions 16 of the driven body 1 are located. As shown in Fig. 4(b), the lever member 2 is provided with, as an arm portion for applying a driving force to the driven body 1, a drive arm 21 that is located in a direction perpendicular to the optical axis AX. The lever member is also provided with an extending arm 22 that extends in the optical axis AX direction from a base end portion of the drive arm 21, and thus has an inverted L-shape in side view. A pivotally-supporting portion 20 is formed at a bent portion provided at the base end portion, and the pivotally-supporting portion 20 is swingably fitted to a support leg 8 provided to stand on the base member 4. Furthermore, at an end portion of the extending arm 22 away from the pivotally-supporting portion 20, there is formed a suspension portion 23 from which a shape memory alloy wire 3 is suspended as an SMA actuator.

With this structure, when the shape memory alloy wire 3 is energized and contracts, the suspension portion 23 is urged in a direction toward the optical axis AX. This makes the lever member 2 swing around the pivotally-supporting portion 20, and as a result, the drive arm 21 pushes the engagement projection portions 16 up in the optical axis AX direction. That is, the suspension portion 23 functions as a displacement input portion 2A, abutment portions between the drive arm 21 and the engagement projection portions 16 function as a displacement output portion 2B, and the engagement projection portions 16 function as a driving force input portion.

The drive arm 21 is, for example, as shown in Fig. 4(a), formed along the ringshaped circumference of the driven body 1 to have a shape of an arc in plan view. The drive arm 21 is also formed to extend to the engagement projection portion 16 such that the drive arm 21 as a whole surrounds half of the driven body 1.

The shape memory alloy wire 3 applies the driving force to the lever member 2, and is, for example, a rectilinear actuator formed as a wire of a shape memory alloy (SMA) such as an Ni-Ti alloy. The shape memory alloy wire 3 has the following feature. That is, it expands when a predetermined tension force is applied thereto in a low-temperature low-elastic-coefficient state (a martensite phase); and when it is heated in the expanded state, its phase is transformed such that the shape memory alloy wire 3 is shifted to a high-elastic-coefficient state (a austenite phase: a mother phase), and returns from the expanded state to a state of its original length (that is, recovers its initial shape).

In this embodiment, the above phase transformation is induced by heating the shape memory alloy wire 3 by energization. That is, Joule heat is generated by energizing the shape memory allow wire 3 itself, which is a conductor having a predetermined resistance, and the shape memory alloy wire 3 transforms from its martensite phase to its austenite phase by self-heating based on the resulting Joule heat. To achieve this, first and second electrodes 30A and 30B are fixed to both ends of the shape memory alloy wire 3 for energization heating of the shape memory alloy wire 3. The electrodes 30A and 30B are fixed to predetermined electrode fixing portions provided on the base member 4.

The shape memory alloy wire 3 is placed in an L-shape or a U-shape surrounding outside of the driven body with the suspension portion 23 as a winding portion, and the shape memory alloy wire 3 is supported by the extending arm 22 of the lever member 2 such that it is bent with respect to the extending arm 22 to form a "<" shape. When the shape memory alloy wire 3 is energized via the electrodes 30A and 30B, it is heated to contract, causing the lever member 2 to swing.

The electrodes 30A and 30B are respectively arranged close to the engagement projection portions 16 of the driven body 1. Lengths from where the shape memory alloy wire 3 is bent with respect to the extending arm 22 to the respective electrodes 30A and 30B are substantially the same, and thus the shape memory alloy wire 3 expands or contracts by the same amount on both sides of the suspension portion 23 functioning as the displacement input portion 2A, and as a result, friction between the shape memory alloy wire 3 and the lever member 2 is prevented. The suspension portion 23 is formed as a V-shaped groove, and by placing the shape memory alloy wire 3 in the V-shaped groove of the suspension portion 23, the shape memory alloy wire 3 can be securely suspended with respect to the lever member 2.

A bias spring 7 urges the driven body 1 along the optical axis AX direction, in a direction opposite to a direction in which the displacement output portion 2B is moved by actuation (contraction) of the shape memory alloy wire 3. The bias spring 7 is formed as a compression coil spring having a diameter substantially equal to a circumference size of the driven body 1, and one end side (for example, the bottom end side) of the bias spring 7 abuts against the top surface of the driven body 1. The other end side (for example, the top end side) of the bias spring 7 abuts against a cover N, which is a stationary portion such as an inner surface of the housing of a mobile phone.

Strength of the bias spring 7 is weaker than the driving force applied to the lever member 2 by the shape memory alloy wire 3, and thus the driven body 1 is pressed toward the base member 4 when the shape memory alloy wire 3 is not activated. On the other hand, when the shape memory alloy wire 3 is activated, the driven body 1 resists the urging force of the bias spring 7 to move in the opposite direction (toward the object side). That is, the bias spring 7 gives a bias load for the driven body 1 to return to its home position when the shape memory alloy wire 3 is not heated by energization.

A length of the shape memory alloy wire 3 is determined such that, when not activated, the shape memory alloy wire 3 is tense receiving the pressing force of the bias spring 7 acting thereon via the driven member 1 (the engagement projection portions 16) and the lever member 2. That is, the length of the shape memory alloy wire 3 is determined such that, whether activated or not, the shape memory alloy wire 3 always makes the lever member 2 (the drive arm 21 abut (be pressed) against the driven body 1 (the engagement projection portions 16). With this structure, when the shape memory alloy wire 3 is activated, its displacement is quickly transmitted to swing the lever member 2.

When the shape memory alloy wire 3 is in its stop state (expanded state) and not heated by energization, the driven body 1 is pressed by the pressing force of the bias spring 7 toward the base member 4 side, and thereby the driven body 1 is held in its home position (see Fig. 4(b)). On the other hand, when the shape memory alloy wire 3 is activated (when it contracts), a driving force F resulting from this activation is applied to the displacement input portion 2A of the lever member 2, and makes the lever member 2 swing, this swing of the lever member 2 making the displacement output portion 2B move in the optical axis AX direction (see Fig. 4(c)). As a result, a driving force is applied to the driven body 1 to move it toward the object side, and the driven body 1 moves against the pressing force of the bias spring 7. Here, it is possible to adjust the displacement amount of the driven body 1 by controlling the driving force for swinging the lever member 2 through controlling the electric current fed to the shape memory alloy wire 3 to thereby adjust the strength of the driving force F.

When the shape memory alloy wire 3 stops being energized (or the voltage is lowered to a predetermined level) so that the shape memory alloy wire 3 is cooled and returns to its martensite phase, the driving force F disappears, and by being pressed by the pressing force of the bias spring 7, the driven body 1 moves along the optical axis AX direction back to its home position. In this way, it is possible to displace the driven body 1 along the optical axis AX direction by turning on/off the power supply to the shape memory alloy wire 3, and it is possible to adjust the displacement amount of the driven body 1 by controlling the electric current to the shape memory alloy wire 3 to adjust the strength of the driving force F.

With the drive mechanism and the drive device structured as described above, it is possible to move the driven body 1 as desired along the first axis direction (the optical axis AX direction) according to the actuation of the shape memory alloy wire 3.

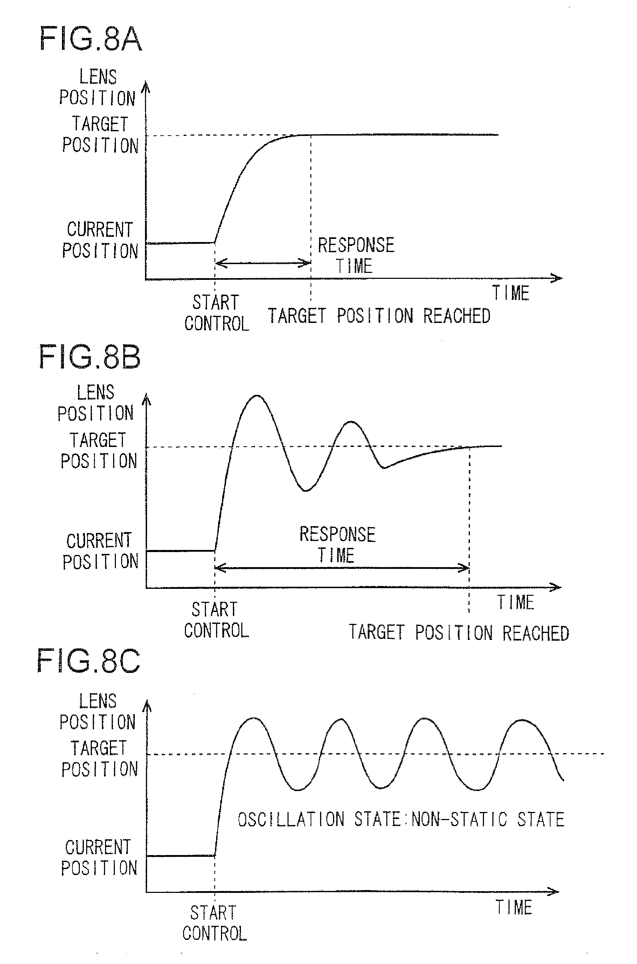

However, since the drive mechanism and the drive device described above have the shape memory allay wire 3 and the bias spring 7, etc., which are elastic, vibration occurs when the mechanism or the device is driven and the shape memory alloy wire 3 is contracted or when an external force such as a shock is applied thereto. A description will be given of such vibration with reference to Fig. 8.

Fig. 8(a) shows a vibration waveform observed when a viscoelastic member of the present invention is provided, exerting a vibration damping effect, Fig. 8(b) shows a vibration waveform observed with a conventional lens unit drive device where no viscoelastic member is provided, and Fig. 8(c) shows a vibration waveform observed with the conventional lens unit drive device when an even larger vibration is applied thereto.

As is clear from the figures, in the drive mechanism and the drive device using the elastic shape memory alloy wire 3 and the bias spring 7, the waveform (see Fig. 8(b)) is such that it repeatedly goes up and down to converge to a point indicating a target position at which the lens unit should stop. In the case of still larger vibration, as shown in Fig. 8(c), the waveform does not converge on the target position soon, and the vibration continues for a long time. What is happening in such a non-static state is called oscillation, and in such a sate, an excessive stress continues to be generated in the shape memory alloy wire 3, causing the shape memory alloy wire 3 to deteriorate or break, and thus, oscillation is a serious defect for a drive mechanism using a shape memory alloy.

To cope with this, in this embodiment, a drive mechanism and a drive device are provided with a fixed portion, a driven body, and an SMA actuator (a shape memory alloy wire) that gives the driven body a driving force to drive it in a first axis direction; the driven body and the fixed portion are connected to each other via a viscoelastic member (Example 1), or/and a predetermined portion of a displacement member (the lever member 2) and the fixed portion are connected to each other via a viscoelastic member (Embodiment 2), such that the vibration damping effect as shown in Fig. 8(a) is exerted to shorten the response time to allow the lens unit to move quickly to the target position.

### (Example 1)

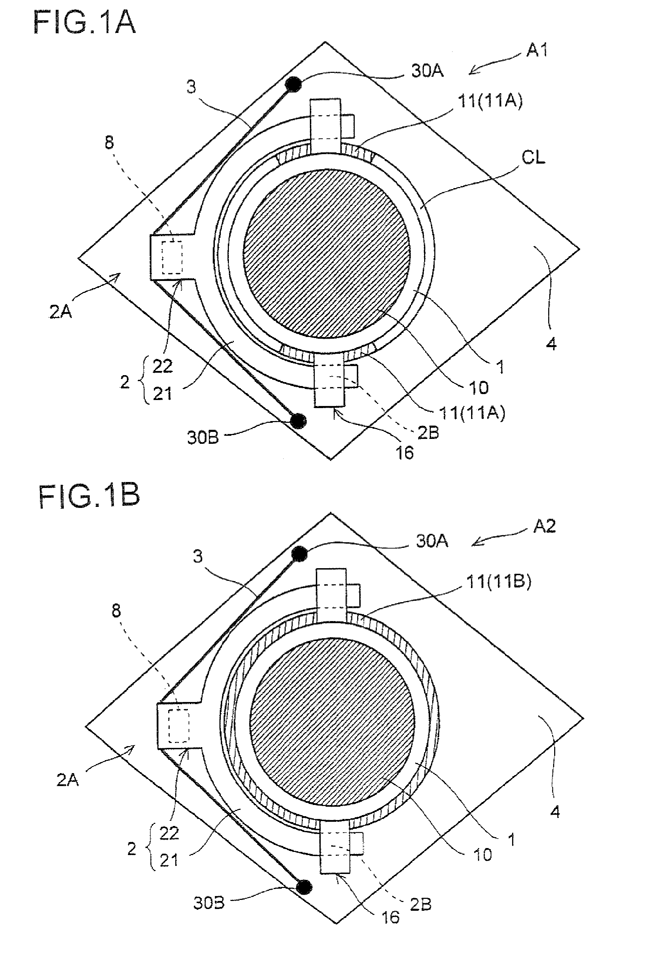

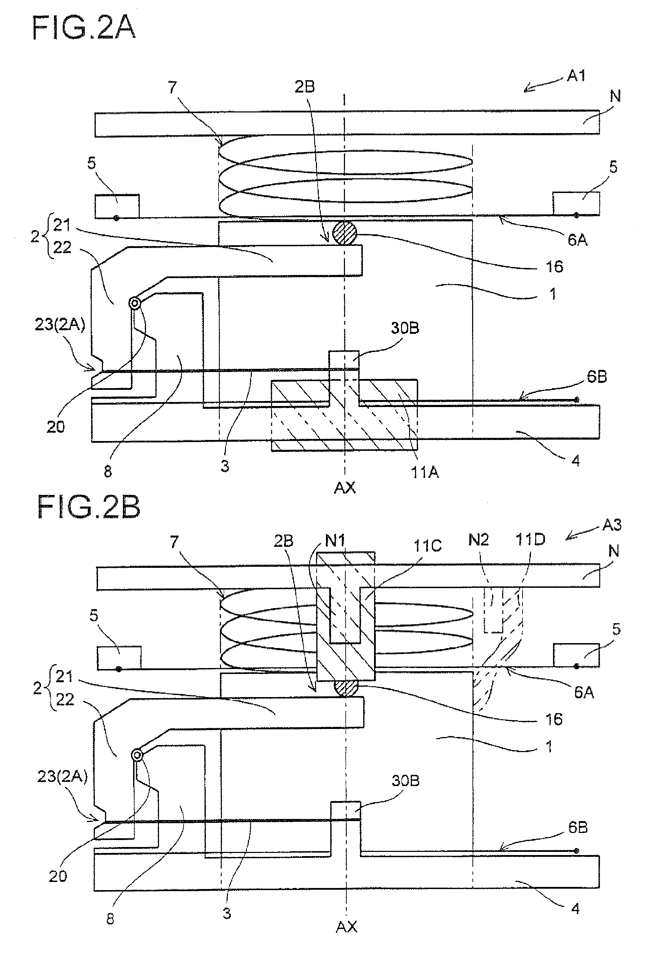

Next, a description will be given of a drive device A1 of a first embodiment which is provided with a drive mechanism of the present invention and provided with a viscoelastic member, with reference to Figs. 1(a) and 2(a). First, descriptions will be given of a fitting position of the viscoelastic member that the drive device A1 of the first embodiment has and its effect. The drive device A1 is structured such that a viscoelastic member 11(11A) is interposed in a clearance CL between a driven body I and a through hole portion of a base member 4, and the driven body 1 and the base member 4 are connected to each other via the viscoelastic member 11 (11A).

For the purpose of reciprocating the driven body 1 in an axis direction, the drive device A1 is provided with: a shape memory alloy wire 3 fitted by being placed in an L-shape or a U-shape surrounding outside of the driven body 1 with the suspension portion 23 as a winding portion; and a lever member 2 that amplifies a displacement amount of the wire to displace the driven body 1 in an optical axis AX direction (a first axis direction).

Here, the shape memory alloy wire 3 is fitted such that it is wound around a suspension portion 23 with its two ends respectively fixed to electrodes 30A and 30B provided in two diagonally opposing corners, and as a result, a long shape memory alloy wire can be used as a driving source. Furthermore, the shape memory alloy wire 3 placed in the L-shape or the U-shape makes it possible to securely drive the lever member 2 in a well-balanced manner, which is advantageous.

By interposing the viscoelastic member 11 (11A) in the clearance CL between the base member 4 and the driven body 1 in a drive device provided with the above-described drive mechanism, a structure is achieved in which the driven body 1 is connected to a fixed portion via the viscoelastic member 11 (11A), making it possible to absorb vibration energy generated in a direction in which the driven body 1 moves when it reciprocates. Preferably, the viscoelastic member 11 is interposed in the clearance CL between the base member 4 and the driven body 1, at least in an area on an axis line direction including the engagement projection portions 16 of the driven body 1 in plan view. This is because, by providing the viscoelastic member 11 which absorbs the vibration energy in the same area on the axis line direction where a driving force that makes the driven body 1 move acts, a viscoelastic force and the driving farce act in the same area on the axis line direction and the two forces are balanced, allowing a smooth rectilinear movement of the driven body 1.

As described above, with a viscoelastic member placed in the clearance CL present on the axis line (the first axis) direction including a driving force input portion (to which the engagement projection portions 16 correspond) that the driven body 1 has, a viscoelastic force acts in the area on the same axis line direction as the driving force of the shape memory alloy wire (SMA actuator) 3, so that the driving force and the viscoelastic force are balanced with each other, and this allows a smooth rectilinear movement of the driven body 1.

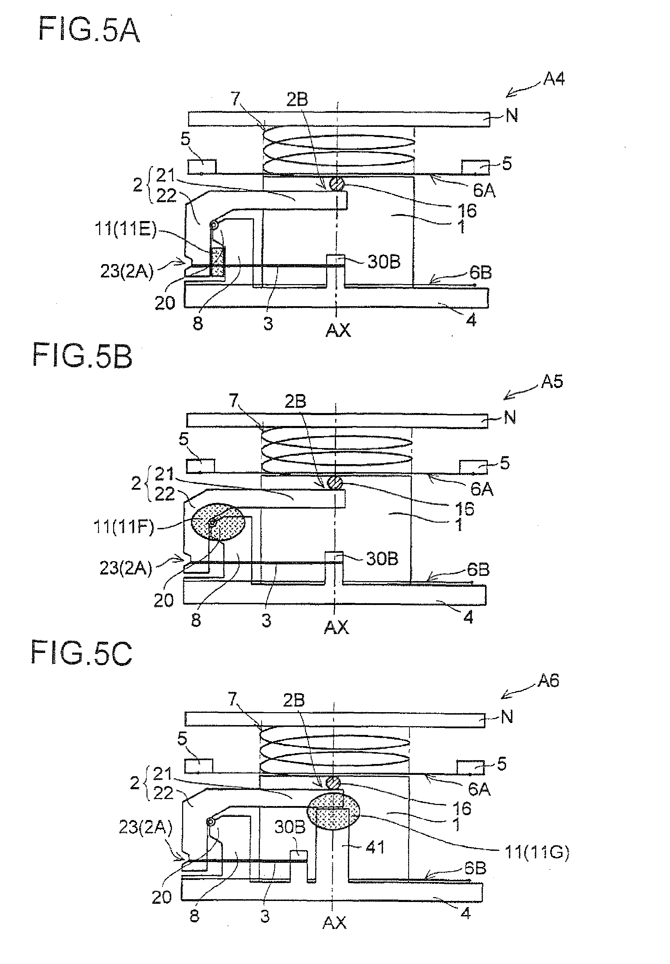

Furthermore, the position for the viscoelastic member 11 can be adjusted according to a desired level of vibration damping effect; for example, it is possible to place the viscoelastic member 11 at a plurality of positions in the clearance CL or all along the circumference of the clearance CL. Fig. 5(a) shows a waveform of a case where a desired level of vibration damping effect is exerted. As is clear from the figure, the provision of the viscoelastic member 11, which absorbs the vibration energy, makes it possible to reduce a response time the driven body 1 takes to move to a target position and stop, and thus to perform a stable and fast position control of the driven body 1. Furthermore, even if a shock force is applied, the shock force is absorbed and vibration is immediately stopped, and thus no deterioration or no break of the SMA occurs. Moreover, the viscoelastic member 11 can be fitted only by being placed in a predetermined area in the clearance CL between the driven body 1 and the base member 4 so as to fill the area after the device is assembled, and this leads to a drive mechanism and a drive device which are easy to assemble.

As the viscoelastic member 11, there can be used adhesive, elastic, and soft materials that absorb vibration, including viscoelastic resins such as silicone gels and elastic adhesives that harden into a rubber elastic body after application.

As a position for placing the viscoelastic member 11 (11A) in the drive device A1, there can be used part of an area of the clearance between the base member 4 and the driven body 1, the area including the engagement projection portions 16 of the driven body 1 in plan view. If the vibration to be stopped is not very large, placing the viscoelastic member 11 A in this size of area is sufficient to exert a desired vibration damping effect. However, in a case in which a larger vibration damping effect is required, as shown in a drive device A2 of a second embodiment shown in Fig. 1(b), the requirement can be satisfied by placing a viscoelastic member 11B such that it is charged into the entire circumferential portion of the clearance CL between the through hole portion of the base member 4 and the driven body 1. With the drive device A2 having this structure, the area over which the driven body 1 and the viscoelastic member 11B are in contact with each other can be increased, and this results in a larger viscoelastic effect, which leads to a larger vibration damping effect.

Furthermore, in a drive mechanism and a drive device structured such that the viscoelastic member 11B is placed along the entire circumference of the driven body 1, the viscoelastic member 11B provided along the circumference of the driven body 1 prevents displacement of the driven body 1 in a radial direction perpendicular to the direction in which the driven body 1 is driven, and thus the viscoelastic member 11B exerts a function of assisting the rectilinear movement of the driven body 1.

Moreover, also by connecting the driven member 1 to another fixed portion instead of the base member 4 via a viscoelastic member, vibration damping effect can be exerted. For example, as in a drive device A3 of a third embodiment shown in Fig. 2(b), which is a modified example of the drive device A1, a viscoelastic member 11C may be placed by using the cover member N. Fierce, it is preferable that the viscoelastic member 11C is placed in an area including the engagement projection portion 16 located at the displacement output portion. This is for the purpose of providing the viscoelastic member 11, which absorbs vibration energy, in the same area on the axis line direction where the driving force acts to move the driven body 1, as in the drive device A1 of the first embodiment. In addition, for the purpose of facilitating the operation of placing the viscoelastic member 11C, a hanging portion N1 may be formed in the portion where the viscoelastic member 1-C is placed, such that the viscoelastic member 11C can be placed so as to connect the hanging portion N1 to the driven body 1.

Furthermore, a drive mechanism and a drive device may be structured such that, in a plurality of positions along the circumference, in addition to the area including the engagement projection portion 16, a second hanging portion N2 is provided as indicated by an imaginary line in the figure for another viscoelastic member 11B to be placed thereon. Any of the above-described structures exerts a vibration damping effect by filling the clearance between the mobile driven body 1 and the fixed portion around the driven body 1 with the viscoelastic member 11, and makes it possible to obtain a drive mechanism and a drive device that easily suppresses resonance occurring in a moving direction of a driven body with a simple structure to which no special component is added. In connecting the driven body 1 to the fixed portion around it with a viscoelastic member, it is preferable that the driven body 1 is connected to the fixed portion with a viscoelastic member placed in an area on an axis line direction of the driven body 1 that moves, the area at least including the engagement projection portion.

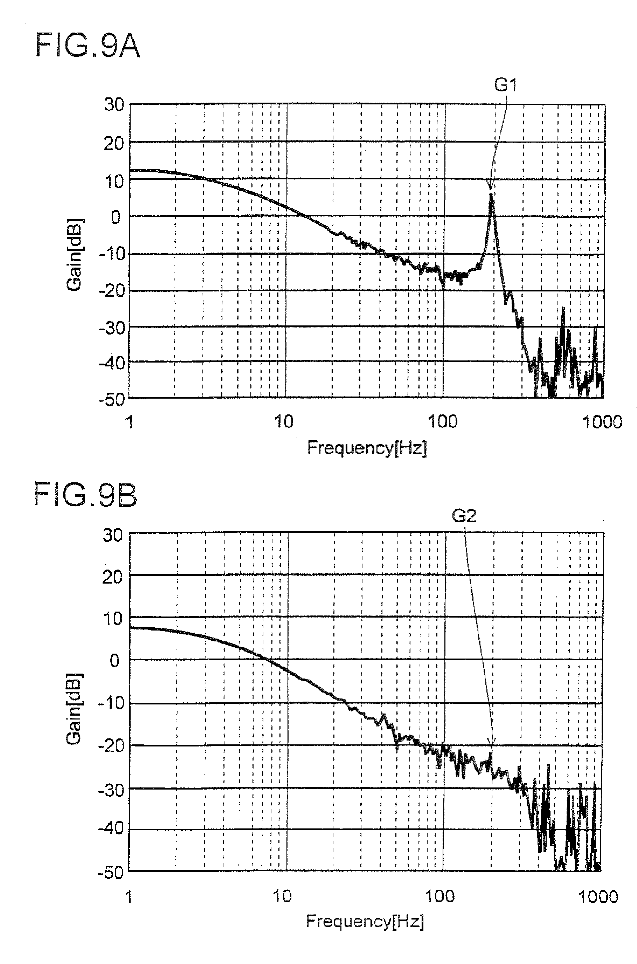

Fig. 9 shows results of an experiment of measuring frequency response characteristics conducted to evaluate the vibration damping effect of a drive device provided with a viscoelastic member. The frequency response characteristic indicates at what amplitude an apparatus operates with respect to a frequency (speed) of an operation signal that is fed to the apparatus, and is well known as a method of evaluating the vibration of an apparatus. Fig. 9(a) is a graph showing the frequency response characteristic of a drive device provided with no viscoelastic member, while Fig. 9(b) is a graph showing the frequency response characteristic of a drive device having a viscoelastic member placed along the entire circumference of a clearance between a base member and a driven body.

As is clear from the figure, with the drive device B1 provided with no viscoelastic member 11, a large amplitude is observed around 200Hz. The phenomenon observed at the point in the graph where the amplitude is locally large is called resonance, and the extent of vibration of the apparatus can be inferred from the frequency and the amplitude value of the input signal when resonance occurs. The larger the amplitude of a resonance is, the larger the vibration of an apparatus is, and the lower the frequency of a resonance is, the more vibration is likely to occur when an apparatus is controlled. Thus, a smaller amplitude and higher frequency of resonance will result in a smaller vibration of an apparatus, and a smaller vibration leads to a high-speed control.

That is, with the drive device B1 provided with no viscoelastic member, a resonance portion G1 appears. However, as shown in Fig. 9(b), by placing a viscoelastic member in an appropriate predetermined position, it is possible to obtain a response G2 including no resonant response and thus to prevent a large amplitude from locally occurring. Thus, interposing the viscoelastic member 11 in the clearance between the base member 4 and the driven body 1 helps prevent a resonance phenomenon. Furthermore, with this example, whose vibration waveform is similar to the one shown in Fig. 8(a), it is possible to achieve a lens drive device that has a short response time and that is capable of performing high-speed control.

There are various kinds of the viscoelastic materials for the viscoelastic member 11 which are different in viscosity, elasticity, etc. To effectively prevent vibration, it is necessary to choose a material having optimum values of these physical properties. However, it is difficult to minutely control these physical properties, and as an alternative, it is possible to change the degree of vibration damping effect by controlling the amount of viscoelastic member and the area of portions connected to each other via the viscoelastic member.

For example, the method of interposing a viscoelastic member in part of the clearance between the base member 4 and the driven body 1 is an example in which the amount of viscoelastic member and the area of portions connected to each other by the viscoelastic member are both small, and the viscoelastic effect is also comparatively small. However, this case is advantageous in that, since the resistance force that the driven body 1 receives from the viscoelastic member is also small, loss of the reciprocation of the driven body 1 can be reduced.

The method in which a viscoelastic member is placed in the clearance between the base member 4 and the driven body 1 over the entire circumference of the clearance is an example, in which the amount and the area are both large and a comparatively large viscoelastic effect is obtained. However, it is disadvantageous in that the lever member 2 receives a large resistance force. In this way, differences in amount of the viscoelastic member and in connection area of the viscoelastic member result in differences in vibration damping effect and in resistance force that the lever member receives. Thus, by appropriately changing the amount and the area in accordance with the physical properties of the viscoelastic member, effective vibration can be effectively suppressed.

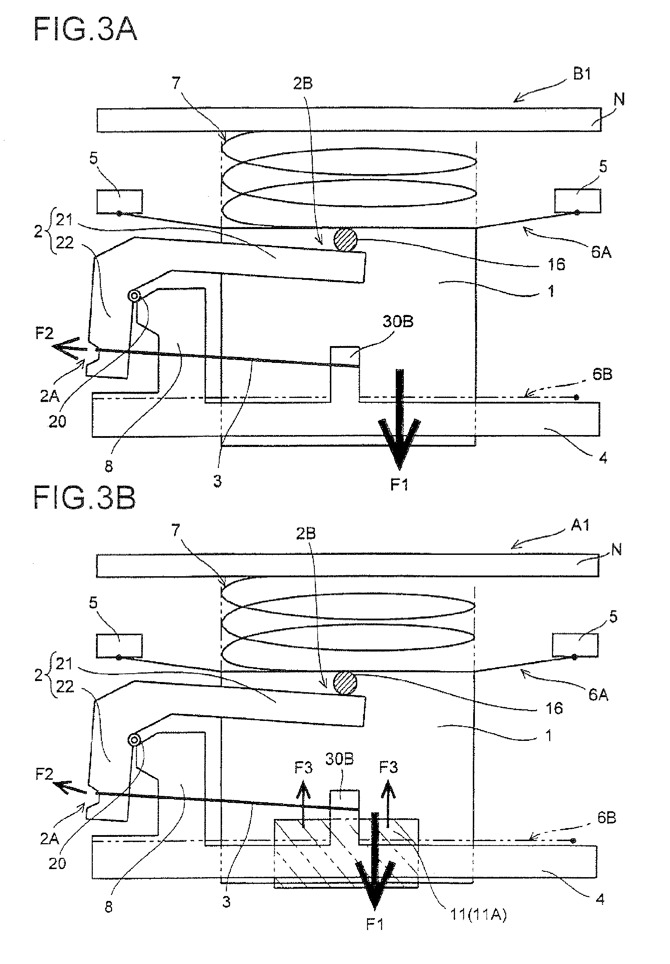

Next, a description will be given of a phenomenon observed when a shock is applied, with reference to Fig. 3. Fig. 3(a) shows the case of the drive device B1 which is provided with no viscoelastic member, while Fig. 3(b) shows the case of the first embodiment (the case of the drive device A1) provided with a viscoelastic member.

If a shock force F1 is applied to each of the drive devices as an external force in the downward direction in the figures, the lever member 2 is pressed down via the displacement output portion 2B, and a force F2 acts in such a direction as to pull the shape memory alloy wire 3. This is because the shock force F1 is sufficiently larger than a spring force of the bias spring 7 and a spring force of the shape memory alloy wire 3 that are balanced via the lever member 2. If the shock force F1 like this is applied, the driven body 1 is moved to collide against a movable end to stop, causing the apparatus and the shape memory alloy wire 3 to receive an even larger force.

As a result, in the drive device B1 shown in Fig. 3(a) which is not provided with a viscoelastic member, the shape memory alloy wire 3 receives a stress of a value greater than a predetermined value and expands. If this expansion is a small one, it is possible to restore the shape memory alloy wire 3 to its initial shape by energizing it. However, if it is a predetermined amount of expansion or larger, the expansion stays as permanent deformation and the shape memory alloy wire 3 cannot be restored to its initial shape. If permanent deformation occurs in the shape memory alloy wire 3 and it is loosened, it leads to a critical problem that an electric current of a predetermined value or larger is necessary to drive the lever member 2, or that the drive device cannot be fully driven even with a maximum electric current.

If the same shock force F1 is applied to the drive device A1 of this embodiment, as shown in Fig. 3(b), a return force F3 is generated via the viscoelastic member 11. This reduces the force F2 that pulis the shape memory alloy wire 3. Furthermore, even if the driven body is moved to collide against the movable end, the shock force of the collision is absorbed, and thus the amount of force applied to the shape memory alloy wire 3 is reduced.

As described above, with this embodiment provided with a viscoelastic member which is placed therein, when a shock force is applied, the amount of force that the shape memory alloy wire 3 receives can be reduced, and thus it is possible to solve the problem of the shape memory alloy wire 3 being expanded due to a shock force.

The present invention, in which a viscoelastic member is used, can be practiced without changing the size of the apparatus of the conventional example, and thus the present invention contributes to realize a compact apparatus. Furthermore, a viscoelastic member can be interposed in a clearance between a driven body and a base member or the like in a simple operation, and this contributes to improved assembly workability.

The above-described drive devices A1 A2, and A3 shown in Figs. 1(a), 1(b), and 2(b), respectively, are usable in shooting apparatuses having a compact lens unit that rectilinearly moves in the optical axis direction of the lens. In that case, the driven body 1 corresponds to a lens barrel, and an axis corresponds to the optical axis. Furthermore, by forming the base member 4 supporting the lens barrel having a circular sectional shape as a rectangular solid unit having a rectangular shape in section perpendicular to the optical axis, it is possible to use the four corners around the lens barrel as component-fitting space. This facilitates the provision of the support leg 8, which pivotally supports the lever member 2 and around which the shape memory alloy wire 3 is wound, in a corner of the rectangular shape, and electrode fixing portions for the shape memory alloy wire 3 can be provided in one or two corners adjacent to the corner. For example, the electrodes 30A and 30B of the shape memory alloy wire 3 can be provided in the two corners adjacent to the corner where the support leg 8 is provided. A drive device having this structure can be mounted in a compact lens unit, facilitating the rectilinear movement of the lens in the optical axis direction, and can be mounted in a mobile phone, etc. as a lens drive device.

In this case, as described above, the clearance between the movable lens barrel and the base member 4 is filled with the viscoelastic member via which the lens barrel and the base member are connected to each other, and thereby a vibration suppressing function is exerted. This makes it possible to stably move the lens barrel rectilinearly in the optical axis direction without resonance.

As hitherto described, with the drive mechanism according to the present invention, since a driven body and a. fixed portion are connected to each other via a viscoelastic member, vibration energy generated as the driven body reciprocates in its movement direction is absorbed by the viscoelastic member. As a result, even when an external force is applied, the vibration energy is absorbed by the viscoelastic member to prevent excessive vibration of the apparatus, and thus deterioration of an SMA actuator is reduced and the apparatus is protected from damage. Also, resonance is effectively prevented from occurring when the driven body is driven via the SMA actuator, and this results in high-speed and stable position control of the driven body.

According to the drive device of this embodiment, it is possible to obtain a drive device that prevents the apparatus from excessively vibrating to thereby protect the apparatus from damage and the shape memory alloy wire from degradation even if, for example, the apparatus is dropped and a shock force is applied thereto, that performs stable and high-speed position control of the driven body, and that contributes to compactness and lightweightness as well as to improved workability of assembly.

### (Example 2)

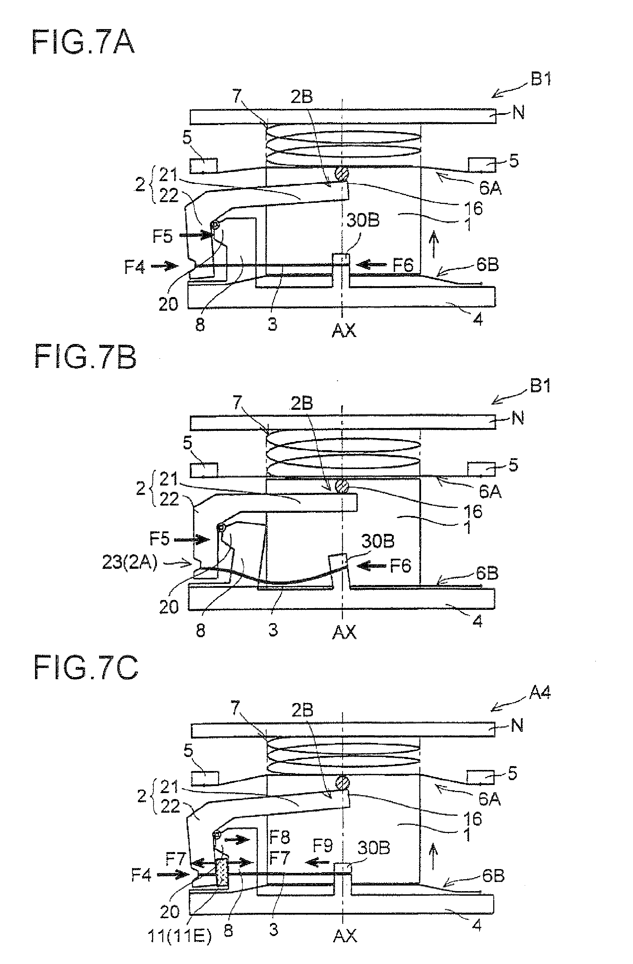

Even when the shape memory alloy wire 3 is not energized, if it is exposed to a high-temperature environment, it shows a response similar to that it shows when it is energized. That is, under a high-temperature environment, the shape memory alloy wire 3 starts transformation to generate a stress, which is a feature of the shape memory alloy. This state will be described with reference to Fig. 7.

As shown in Fig. 7(a), under a high-temperature environment, the shape memory alloy wire 3 starts to transform and a stress F4 is generated. As a result, the lever member 2 receives a driving force that tends to drive the lever member 2 to rotate, and via the pivotally-supporting portion 20, the driving force acts on the support leg 8 as a stress F5. Also, a stress F6 acts on the electrode 30B.

Here, if base portions of the base member 4, the support leg 8, and the electrode 30B are made of resin such as plastics, and left in such a stress-applied state for a long time, the resin members creep, resulting in the state shown in Fig. 7(b). That is, the resin products are deformed in such a direction as to loosen the shape memory alloy wire 3, which results in a problem that predetermined drive displacement cannot be obtained even when the shape memory alloy wire 3 is energized. This is a serious defect for a drive mechanism or a drive device using a shape memory alloy.

To alleviate these defects described above, in this embodiment, a drive mechanism is structured such that a predetermined portion of a displacement member (the lever member 2) and a fixed portion are connected to each other via a viscoelastic member, and a drive device is provided with this drive mechanism. For example, in Fig. 7(c) shows a drive device A4 in which a viscoelastic member 11 (11E) is placed in the clearance between a support leg 8 and a suspension portion 23 of an extending arm 22 around which a shape memory alloy wire 3 is wound.

With this structure, even if the drive device A4 is left under a high-temperature environment for a long time and the stress F4 is generated, the extending arm 22 of the lever member 2 deforms the viscoelastic member 11 (11E), and a reaction stress F7 is generated as shown in the figure. In addition, since the reaction stress F7 is generated, the stress generated in the vicinity of a pivotally-supporting portion 20 of the support leg 8 is the stress F7 which is smaller than the above-described stress F4. That is, the stress F8 acts on a position close to the pivotally-supporting portion 20 located at an end side of the support leg 8, and the reaction stress F7 acts on a position close to the suspension portion 23, which is closer to the base portion.

By placing the viscoelastic member 11 (11E) in this way, it is possible to achieve a uniformly-stressed state in which stress is distributed over the area from close to the base portion to the high position of the support leg 8, instead of the state in which the large stress F5 acts on a high position away from the base portion of the support leg 8. Creeping can be prevented by thus distributing the force to the highly strong base portion as well and reducing the stress acting on the high position.

Furthermore, a stress F9, which is a stress that the electrode 30B receives, is smaller by the magnitude of the reaction stress F7, and thus it is also possible to prevent creeping from occurring in this portion.

Since a viscoelastic member 11 may be placed anywhere as long as it connects a predetermined portion of a displacement member (the lever member 2) to a fixed portion, the viscoelastic member 11 may be placed in a position other than the above-mentioned portion in the vicinity of the suspension portion 23 of the extending arm 22. A description will be given of a specific example of such a position for placing a viscoelastic member 11, with reference to Fig. 5.

Fig. 5(a) shows the drive device A4 of the fourth embodiment in which the viscoelastic member 11 (11E) is interposed in the clearance between the suspension portion 23 of the extending arm 22 around which the shape memory alloy wire 3 is placed and the support leg 8. Fig. 5(b) shows a drive device A5 of a fifth embodiment in which a viscoelastic member 11 (11F) is placed around a pivotally-supporting portion 20. Fig. 5(c) shows a drive device A6 of a sixth embodiment in which a viscoelastic member 11 (11G) is placed in the vicinity of a displacement output portion 2B.

In order to place the viscoelastic member 11 (11G) in the vicinity of the displacement output portion 2B to connect it to a fixed portion, in this embodiment, a standing leg portion 41 is provided to project from the base member 4 toward an engagement projection portion 16, and an end of the standing leg portion 41 and a drive arm 21 are connected to each other via the viscoelastic member 11 (11G).

The above described viscoelastic members 31E, 11F, and 11G may be used in combination, and they are adaptable to various types of drive devices by selecting and combining positions suitable for exertion of a desired viscoelastic effect. Thus, a viscoelastic effect is exerted by connecting at least one of the displacement input portion, the displacement output portion, and the pivotally-supporting portion (that is, at least one of the point of effort, the point of load, and the fulcrum of the lever member) to the fixed portion via a viscoelastic member. Furthermore, by connecting a plurality of portions selected from these portions as a combination to a fixed portion, positions suitable to obtain a desired viscoelastic effect can be selected and combined, and this makes it possible to build drive mechanisms adaptable to various types of drive devices.

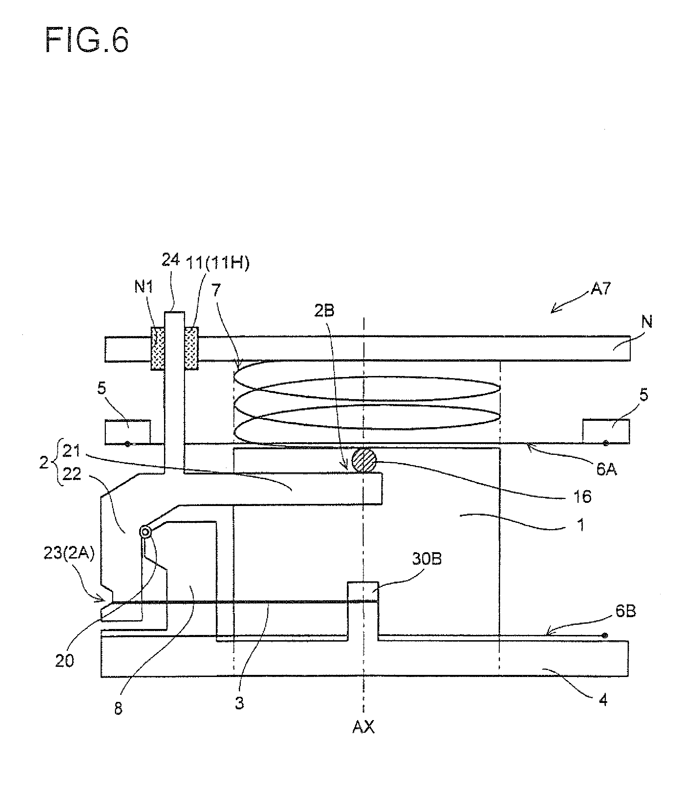

As shown in Fig. 6, a drive device A7 of a seventh embodiment is possible by providing the lever member 2 with an extension arm 24 extending from the lever member 2 to an opening portion N1 or a recess portion provided in the cover N, and connecting the extension arm 24 to the opening portion N1 via a viscoelastic member 11 (11H). This structure makes it possible to place a viscoelastic member in a position at a predetermined arm length by fitting the viscoelastic member to the additionally-provided extension arm 24, and thereby to exert an effective viscoelastic effect by use of what is called the principle of leverage.

Thus, it is possible to exert an effective viscoelastic effect by providing an extension arm extending to an opening portion or a recess portion provided in a fixed portion and connecting the extension arm to the opening portion or the recess portion via a viscoelastic member in this way, in addition to providing a viscoelastic member in the vicinity of any of the point of effort, the fulcrum and the point of load of a lever member (displacement member).

There are various kinds of viscoelastic members which are different in viscosity and elasticity. To obtain an effective vibration damping effect and an effective stress alleviating effect, it is necessary to choose a material having optimum values of these physical properties. However, it is difficult to minutely control these physical properties. Instead of doing so, by changing the position of a viscoelastic member, the degree of the effects can be easily changed or adjusted.

It is correct to say that, with the above-described drive device A4, in which the viscoelastic member 11 (11E) is placed close to the end of the extending arm 22 of the lever member, the displacement amount is comparatively large and a comparatively large viscoelastic effect is obtained. Furthermore, it is correct to say that, with the drive device A5, in which the viscoelastic member 11 (11F) is placed close to the pivotally-supporting portion 20 of the lever member, the displacement amount is small despite the comparatively large force, and the viscoelastic effect is also comparatively small. Moreover, it is correct to say that, in the case of the drive device A6, in which the viscoelastic member 11 (11G) is placed close to the end of the drive arm 21, the displacement amount is large and a large viscoelastic effect is obtained. Here, however, the resistance force that the lever member receives is also large, and thus the viscoelastic effect and the resistance force vary depending on the position of the viscoelastic member and the displacement amount. Thus, to obtain an effective vibration damping effect and an effective stress absorbing effect, it is vital to appropriately select the position where the viscoelastic member is placed.

As described above, the position where a viscoelastic member 11 is placed can be selected and adjusted according to the extent of the desired vibration damping effect. Fig. 8(a) shows a waveform of a case where a desired vibration prevention effect is exerted. As is clear from the figure, the interposition of the viscoelastic member 11, which absorbs the vibration energy, shortens a response time the driven body I takes to move to a target position and stop, and as a result, a stable and high-speed position control of the driven body 1 is achieved. Furthermore, even if the drive device is left under a high-temperature environment for a long time, a thereby caused stress is alleviated and vibration is quickly suppressed, and thus the SMA is prevented from deteriorating or breaking.

As the viscoelastic member 11 can be used adhesive, elastic, and soft materials that absorb vibration, the materials including, for example, viscoelastic resins such as silicone gels, and elastic adhesives that harden into a rubber elastic body after application.

With the drive device of this embodiment as well, the frequency response characteristic as shown in Fig. 9 (b) is exerted. In Fig. 9(a) showing the frequency response characteristic of the drive device B1 of the conventional example provided with no viscoelastic member, the resonance portion G1 appears around 200 Hz. However, as shown in Fig. 9(b), by placing a viscoelastic member in an appropriate predetermined position, it is possible to obtain a response G2 including no resonant response, and to prevent a large amplitude from locally occurring. Thus, by connecting a predetermined portion of the lever member 2 (a displacement member) to the fixed portion via the viscoelastic member 11, it is possible to prevent a resonance phenomenon. Furthermore, with this example, whose vibration waveform is similar to the one shown in Fig. 8(a), it is possible to achieve a lens drive device with a short response time and capable of performing high-speed control.

In addition, since a viscoelastic member is used in the present embodiment, it can be practiced without changing the size of the apparatus of the conventional example, and thus it contributes to the minimization of the apparatus. Moreover, the fitting operation of the viscoelastic member is achieved simply by fitting the viscoelastic member 11 to a predetermined area between the lever member 2 and the fixed portion, and this leads to a drive mechanism and a drive device which are easy to assemble.

Just like the drive devices A1 - A4 described in Example 1, the drive unit A5 - A7 of this embodiment can also be used in a shooting apparatus having a compact lens unit that moves rectilinearly in the optical axis direction of the lens. Thus, since they are also suitable for use with a compact lens unit that is easy to move rectilinearly in the optical axis direction of the lens, they are preferably applicable as drive devices for lenses mounted in compact mobile terminals such as mobile phones.

When any of them is applied as such a drive device, since the displacing lever member 2 and a fixed portion such as the base member 4 are connected to each other via the viscoelastic member to exert a viscoelastic effect (a vibration damping effect, a stress absorbing effect), it is possible to rectilinearly move the lens barrel in a stable manner without resonance.

As described above, according to the drive mechanism of this embodiment, since a predetermined portion of the displacement member (the lever member) is connected to the fixed portion via a viscoelastic member, it is possible to absorb the stress of an SMA actuator generated when it is left under a high-temperature environment for a long time, and thus to reduce deterioration of the SMA actuator or the apparatus (particularly a resin product) and to protect the apparatus from damage. Also, since the viscoelastic member absorbs the vibration energy generated, when the driven body reciprocates, in the movement direction of the driven body, resonance is effectively prevented from occurring when the driven body is driven via the SMA actuator, and high-speed and stable position control of the driven body is achieved.

Moreover, according to the drive device of this embodiment that uses a shape memory alloy wire as the SMA actuator and that is provided with a viscoelastic member, a drive device is obtained with which the apparatus is protected from damage and the shape memory alloy wire is protected from degradation even when it is left under a high-temperature environment, stable and high-speed position control of the driven body is achieved, and compactness, lightweightness, and good assembly workability are obtained.

As described above, according to the present invention, in a drive mechanism and a drive device, to which an SMA actuator is applied, vibration of a driven body is prevented and deterioration of the SMA is prevented by adopting a simple structure in which the driven body is connected to a fixed portion via a viscoelastic member and/or a simple structure in which a predetermined portion of a lever member, which is a displacement member, is connected to a fixing portion of the device via a viscoelastic member. Furthermore, stress of the SMA actuator generated when it is left under a high-temperature environment for a long time is alleviated to suppress deformation of a resin product forming the apparatus and vibration of the driven body, and to prevent degradation of the SMA. Moreover, it is possible to obtain a drive mechanism and a drive device that are capable of performing fast and stable position control of the driven body, that contribute to compactness and lightweightness, and that can be easily assembled.

### Industrial Applicability

The advantages discussed hereinabove make the drive mechanism and the drive device according to the present invention applicable to a shooting apparatus having a compact lens unit that moves rectilinearly in the optical axis direction of the lens.

## Claims

1. A drive mechanism, comprising:
a fixed portion;
a driven body; and
a shape memory alloy actuator which applies a driving force to the driven body to drive the driven body in a first axis direction,
wherein
the driven body and the fixed portion are connected to each other via a viscoelastic member.

2. The drive mechanism according to claim 1, wherein the viscoelastic member is a viscoelastic resin or an elastic adhesive.

3. The drive mechanism according to claim 1,
wherein the fixed portion has a through hole portion;
wherein there is provided a support member which supports the driven body to be movable in the first axis direction with a predetermined clearance kept with respect to the through hole portion; and
wherein the viscoelastic member is placed in the clearance.

4. The drive mechanism according to claim 3,
wherein the driven body has at least one driving force input portion which receives the driving force of the shape memory alloy actuator; and
wherein the viscoelastic member is placed in the clearance which is present on the first axis direction and which includes the driving force input portion.

5. The drive mechanism according to claim 4, further comprising:
a displacement member which transmits the driving force of the shape memory alloy actuator to the driven body,
wherein
the displacement member is a lever member provided with:
a displacement input portion around which the shape memory alloy actuator is placed; and
a displacement output portion which is formed in a shape of an arm surrounding both sides of the driven body and which is engaged with the driving force input portion.

6. The drive mechanism according to claim 3, wherein the viscoelastic member is placed in the clearance all along a circumference of the clearance.

7. A drive mechanism, comprising:
a fixed portion;
a driven body;
a support member which supports the driven body so as to be movable in a first axis direction with respect to the fixed portion;
a shape memory alloy actuator; and
a displacement member which transmits a driving force of the shape memory alloy actuator to the driven body,
wherein
a predetermined portion of the displacement member and the fixed portion are connected to each other via a viscoelastic member.

8. The drive mechanism according to claim 7, wherein the viscoelastic member is a viscoelastic resin or an elastic adhesive.

9. The drive mechanism according to claim 7,
wherein the displacement member is provided with:
a displacement input portion to which the driving force of the shape memory alloy actuator is inputted;
a displacement output portion which is engaged with the driven body to transmit the driving force to the driven body; and
a pivotally-supporting portion; and
wherein at least one of the displacement input portion, the displacement output portion, and the pivotally-supporting portion is connected to the fixed portion via a viscoelastic member.

10. The drive mechanism according to claim 7,
wherein the displacement member has an extension arm extending to an opening portion or a recess portion formed in the fixed portion; and
wherein the opening portion or the recess portion and the extension arm are connected to each other via a viscoelastic member.

11. The drive mechanism according to claim 7,
wherein the fixed portion has a through hole portion;
wherein there is provided a support member which supports the driven body to be movable in the first axis direction with a predetermined clearance kept with respect to the through hole portion;
wherein the shape memory alloy actuator is a shape memory alloy wire, and the displacement member is a lever member provided with a displacement input portion around which the shape memory alloy wire is placed, a pivotally-supporting portion, and a displacement output portion which gives displacement to the driven body by rotating around the pivotally-supporting portion; and
wherein the fixed portion and at least one of the displacement input portion, the pivotally-supporting portion, and the displacement output portion of the lever member are connected to each other via a viscoelastic member.

12. A drive device, comprising:
a fixed portion provided with a base member having a through hole portion; and
a driven body supported via a support member fitted to the base member such that the driven body is movable in reciprocation in the through hole portion along a direction of an axis of the driven body, a driving force for achieving the reciprocation being obtained via a shape memory alloy wire fitted to the base member,
wherein the driven body is moved via a lever member which amplifies a displacement amount of the shape memory alloy wire;
wherein the lever member is formed to have:
a drive arm which is engaged with an engagement projection portion provided in the driven body at each of two external sides of the driven body opposite to each other with an axis line of the driven body therebetween, the drive arm moving the driven body in a direction of an axis line of the driven body;
a pivotally-supporting portion which swingably supports the drive arm; and
an extending arm provided to extend downward from the pivotally-supporting portion so as to be bent with respect to the drive arm;
wherein a support leg is provided in the base member to support the pivotally-supporting portion, and the drive arm is made to swing via the extending arm by contraction of the shape memory alloy wire suspended from a suspension portion provided at an end side of the extending arm; and
wherein the driven body and the fixed portion are connected to each other via a viscoelastic member placed on an area of the movable driven body on the direction of the axis line of the driven body, the area at least including the engagement projection portion.

13. The drive mechanism according to claim 12, wherein the viscoelastic member is a viscoelastic resin or an elastic adhesive.

14. The drive device according to claim 12,
wherein the viscoelastic member is placed in a clearance between the through hole portion of the base member and the driven body such that the viscoelastic member is placed at least in an area on a direction of the axis line of the driven body in which the engagement projection portion is located.

15. The drive device according to claim 14,
wherein the viscoelastic member is placed in the clearance along an entire circumference of the clearance.

16. The drive device according to claim 12,
wherein the shape memory alloy wire is fitted by being wound around the suspension portion as a winding portion, in an L-shape or a U-shape surrounding an external side of the driven body.

17. The drive device according to claim 16,
wherein
the driven body is a lens barrel, the axis line is an optical line, the base member has a rectangular shape in section in a direction perpendicular to the optical axis, a circular through hole portion is formed in a middle portion of the base member, the lens barrel being freely inserted through the through hole portion, the support leg is provided in a corner of the rectangular shape, and an electrode fixing portion for the shape memory alloy wire is provided in one or two corners adjacent to said corner.

18. A drive device, comprising:
a fixed portion provided with a base member having a through hole portion; and
a driven body supported, via a support member fitted to the base member, to be movable in reciprocation in the through hole portion in a direction of an axis line of the driven body, a driving force for the reciprocation being obtained via a shape memory alloy wire fitted to the base member,
wherein the driven body is made to move via a lever member which amplifies a displacement amount of the shape memory alloy wire;
wherein the lever member is provided with:
a drive arm which is engaged with an engagement projection portion provided in the driven body at each of two external sides of the driven body opposite to each other with an axis line of the driven body therebetween, the drive arm moving the driven body in the direction of the axis line of the driven body;
a pivotally-supporting portion which swingably supports the drive
arm; and
an extending arm provided to extend downward from the pivotally-supporting portion so as to be bent with respect to the drive arm;
wherein a support leg is provided in the base member to support the pivotally-supporting portion, and the drive arm is made to swing, via the extending arm, by contraction of the shape memory alloy wire suspended from a suspension portion provided at an end side of the extending arm; and
wherein at least one of the displacement input portion, the pivotally-supporting portion, and the displacement output portion of the lever member is connected to the fixed portion via a viscoelastic member.

19. The drive mechanism according to claim 18, wherein the viscoelastic member is a viscoelastic resin or an elastic adhesive.

20. The drive device according to claim 18,
wherein the lever member has an extension arm extending to an opening portion or a recess portion formed in the fixed portion; and
wherein the opening portion or the recess portion and the extension arm are connected to each other via a viscoelastic member.

21. The drive device according to claim 18,
wherein the shape memory alloy wire is fitted by being wound around the suspension portion as a winding portion, in an L-shape or a U-shape surrounding an external side of the driven body.

22. The drive device according to claim 21,
wherein
the driven body is a lens barrel, the axis line is an optical line, the base member has a rectangular shape in section in a direction perpendicular to the optical axis, a circular through hole portion is formed in a middle portion of the base member, the lens barrel being freely inserted through the through hole portion, the support leg is provided in a corner of the rectangular shape, and an electrode fixing portion for the shape memory alloy wire is provided in one or two corners adjacent to said corner.
